(19) **Europäisches Patentamt European Patent Office Office européen des brevets**

(11) **EP 4 194 672 B1**

(12) **EUROPEAN PATENT SPECIFICATION**

(45) Date of publication and mention of the grant of the patent:
**11.06.2025 Bulletin 2025/24**

(21) Application number: **21853435.2**

(22) Date of filing: **08.07.2021**

(51) International Patent Classification (IPC):
*F02B 23/08* (2006.01)      *F02P 13/00* (2006.01)
*F02B 19/12* (2006.01)      *F02B 19/18* (2006.01)
*F02P 5/145* (2006.01)

(52) Cooperative Patent Classification (CPC):
**F02P 13/00; F02B 19/1023; F02B 19/12;
F02B 19/18;** F02P 5/145; Y02T 10/12

(86) International application number:
**PCT/JP2021/025838**

(87) International publication number:
**WO 2022/030175 (10.02.2022 Gazette 2022/06)**

(54) **IGNITION SYSTEM**

ZÜNDSYSTEM

SYSTÈME D'ALLUMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.08.2020 JP 2020134723**

(43) Date of publication of application:
**14.06.2023 Bulletin 2023/24**

(73) Proprietor: **DENSO CORPORATION**
**Kariya-city, Aichi 448-8661 (JP)**

(72) Inventors:
  • **KAJI, Yuji**
    **Kariya- city, Aichi 4488661 (JP)**
  • **TAMURA, Ryo**
    **Kariya-city, Aichi 4488661 (JP)**
  • **IMANAKA, Yasuomi**
    **Kariya-city, Aichi 4488661 (JP)**
  • **KAWASHIMA, Yuuta**
    **Kariya-city, Aichi 4488661 (JP)**
  • **IWAMI, Atsushi**
    **Kariya-city, Aichi 4488661 (JP)**
  • **OKA, Tatsuya**
    **Kariya-city, Aichi 4488661 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
  EP-A1- 4 098 857        EP-B1- 2 146 070
  WO-A1-2021/153275       WO-A1-2021/157322
  DE-A1- 2 606 014        JP-A- 2016 035 854
  JP-A- 2018 003 752      JP-A- 2018 150 820
  JP-A- S59 101 533       US-A- 1 403 886
  US-A- 4 029 072         US-A1- 2012 118 262
  US-A1- 2018 100 479     US-A1- 2019 284 988

## Description

This disclosure relates generally to an ignition system which works to ignite fuel in a combustion chamber.

Background Art

Some ignition systems are equipped with a dividing wall and a spark plug. The dividing wall isolates between a main chamber and a pre-chamber in a combustion chamber of an engine. The dividing wall has formed therein a plurality of spray holes communicating the main chamber with the prechamber. The spark plug works to create an electrical spark to ignite fuel upon application of voltage across a spark gap within the pre-chamber. Such a type of spark plug is taught in the following patent literature 1.

WO 2021/153275 A1 discloses the following: This ignition system has a spark plug and an ignition control unit that controls the spark plug. When an engine is in a predetermined operating state, the ignition control unit performs post-top-dead-center ignition control in which ignition is performed at a point after top dead center of compression. The ignition system has an airflow assistance structure that enables an airflow to flow easily to a discharge gap at least at the point after top dead center of compression. The ignition system is configured so that due to the airflow assistance structure and an ignition timing, an airflow of a speed 5 m/s or greater flows to the discharge gap in a post-top-dead-center spark period, which is a period in which a discharge spark occurs in the post-top-dead-center ignition control.

WO 2021/157322 A1 discloses the following: A subsidiary chamber type ignition system comprises: a partition wall that partitions a combustion chamber of an engine into a subsidiary chamber and a main chamber; and an ignition plug that ignites fuel inside the subsidiary chamber. In a high load state, an ignition control unit calculates optimum ignition timing earlier by a combustion time than prescribed optimum combustion timing, and performs optimum ignition control to control ignition timing at the optimum ignition timing. In a low load state, a jetting control unit performs jetting delay prevention control to prevent a jetting time from being longer compared with the high load state to prevent the combustion time from being long, while the ignition control unit performs the above optimum ignition control.

US 1 403 886 A discloses the following: A spark plug body is provided with a chamber having a closure at its lower end provided with a central opening and gas passages surrounding the central opening, a sparking terminal insulated from the body and extending into the opening in spaced relation to the walls thereof to form a spark gap and inwardly opening valves in said passages.

EP 2 146 070 B1 discloses the following: Disclosed is a direct-injection spark-ignition engine designed to promote catalyst activation during cold engine operation. A fuel injection timing for a fuel injection period in an compression stroke is set to allow a first fuel spray injected from a first spray hole to enter a cavity in a piston crown surface, and allow a second fuel spray to impinge against a region of the piston crown surface located closer to an injector than the cavity, so as to cause the second fuel spray having a lowered penetration force due to the impingement to be pulled toward the cavity by a negative pressure generated in the cavity as a result of passing of the first fuel spray therethrough, The direct-injection spark-ignition engine can maximally hold an injected fuel spray around a spark plug to reliably stabilize a combustion state in a combustion mode for promoting catalyst activation during cold engine operation, while enhancing combustion efficiency in a homogenous combustion mode during normal engine operation.

PRIOR ART DOCUMENT

PATENT LITERATURE

Patent Literature 1: Japanese Patent No. 5122367

SUMMARY OF THE INVENTION

The above type of ignition system works to perform a before-top-dead-center ignition task to ignite fuel before the top dead center of the compression stroke, in other words, during the compression stroke in the engine in a normal operation mode. The before-top-dead-center ignition task is to elongate a spark, as created in the pre-chamber, by means of tumble or swirl occurring in the combustion chamber. The elongated spark then ignites fuel to produce a flame which, in turn, jets into the main chamber, thereby facilitating the combustion of the fuel within the combustion chamber.

When a given condition is encountered, the ignition system alternatively performs an after-top-dead-center ignition task to ignite fuel in the expansion stroke after the top dead center of the compression stroke, i.e., during the expansion stroke. Specifically, for instance, in a first idling mode of the engine operation to warm up the catalyst installed in an exhaust path of the engine, the ignition system starts the ignition of fuel as late as possible in order to enhance the efficiency in transmitting thermal energy, as generated by the combustion of fuel, to the catalyst. The ignition system, therefore, ignites the fuel after the top dead center of the compression stroke.

After the top dead center of the compression stroke, the flow of the mixture in the pre-chamber is usually reduced in strength due to the breaking of the tumble or swirl when the piston passes through the top dead center of the compression stroke. This will result in a decrease in elongation of the spark, thereby reducing the ease of ignition of the fuel, thereby increasing the length of time in which the fuel is ignited in the pre-chamber, and the flame is jetted from the pre-chamber into the main chamber, in other words, decreasing the speed of propagation of the flame to the main chamber.

This disclosure was made in view of the above problem. It is a principal object to achieve quick propagation of a flame to a main chamber in an after-top-dead-center ignition control mode.

The principal object is solved by the feature combination of the appending independent claim 1. The further dependent claims are defining advantageous embodiments.

An ignition system in this disclosure comprises a dividing wall and a spark plug. The dividing wall divides a combustion chamber of an engine into a main chamber and a pre-chamber. The has formed therein at least one spray hole which communicates between the main chamber and the pre-chamber. The spark plug works to create a spark by applying voltage across a spark gap between a first electrode and a second electrode to ignite fuel. The pre-chamber has the first electrode. The dividing wall or a member which electrically conducts with the dividing wall has the second electrode.

In the following discussion, the timing when the voltage starts to be applied across the spark gap will be referred to as an ignition timing. The center of an opening of the spray hole which is located close to the pre-chamber will be referred to as a spray hole center. A region which is located 3mm or less away from the spray hole center within the pre-chamber will be referred to as a spray hole-nearby region.

The ignition system works to execute an after-top-dead-center ignition control mode in which an ignition operation to ignite the fuel is performed after a compression stroke top dead center is reached when a given operating condition of the engine is met. In the after-top-dead-center ignition control mode, an ignition source is provided in the form of a self-growable flame kernel within the spray hole-nearby region, the spray hole, or the main chamber within a crank angle of 20° after the ignition timing is reached.

This disclosure offers the following beneficial advantages. In the after-top-dead-center ignition control mode, the ignition source is provided in the spray hole-nearby region, the spray hole, or the main chamber early, e.g., within a crank angle of 20° following the ignition timing. When the ignition source is provided in the spray hole-nearby region or the spray hole, it facilitates the jetting of a flame, as grown from the ignition source, from the spray hole into the main chamber. Alternatively, when the ignition source is provided in the main chamber, it will cause a flame grown from the ignition source to propagate as it is to the main chamber. It is, therefore, possible to propagate the flame quickly to the main chamber in the after-top-dead-center ignition control mode.

BRIEF DESCRIPTION OF THE DRAWINGS

The present disclosure will be understood more fully from the detailed description given hereinbelow and from the accompanying drawings of the preferred embodiments of the invention.

In the drawings:

Fig. 1 is a sectional view which illustrates an ignition system according to the first embodiment;
Fig. 2 is a sectional view which illustrates a prechamber and a region around the prechamber;
Fig. 3 is a graph which represents a relation between a distance between an ignition source and a spray hole center and a coefficient of variation;
Fig. 4 is a graph which represents growth of a flame kernel;
Fig. 5 is a graph which represents a change in pressure in a combustion chamber;
Fig. 6 is a flowchart of a production method for an ignition system;
Fig. 7 is a graph which represents a relation among a spray hole distance, a spray hole ratio, and an in-gap gas flow;
Figs. 8(a), 8(b), 8(c), and 8(d) are sectional views which illustrate a spark plug and a region around the spark plug in an embodiment and spark plugs and regions around the spark plugs in comparative examples;
Fig. 9 is a timing chart which demonstrates development of fuel combustion in comparative examples and an embodiment;
Fig. 10 is a view which illustrates the timing chart in Fig. 9 in which ignition timings are shifted to coincide with each other;
Fig. 11 is a graph which demonstrates transitions in combustion percentage in comparative examples and an embodiment;
Fig. 12 is a graph which illustrates an enlarged portion of Fig. 9; and
Fig. 13 is a graph which illustrates changes in gap flow rate in comparative examples and an embodiment.

MODE FOR CARRYING OUT THE INVENTION

An embodiment in this disclosure will be described below with reference to the drawings. This disclosure is, however, not limited to this embodiment, but may be modified in various ways without departing from the principle of this disclosure.

*FIRST EMBODIMENT*

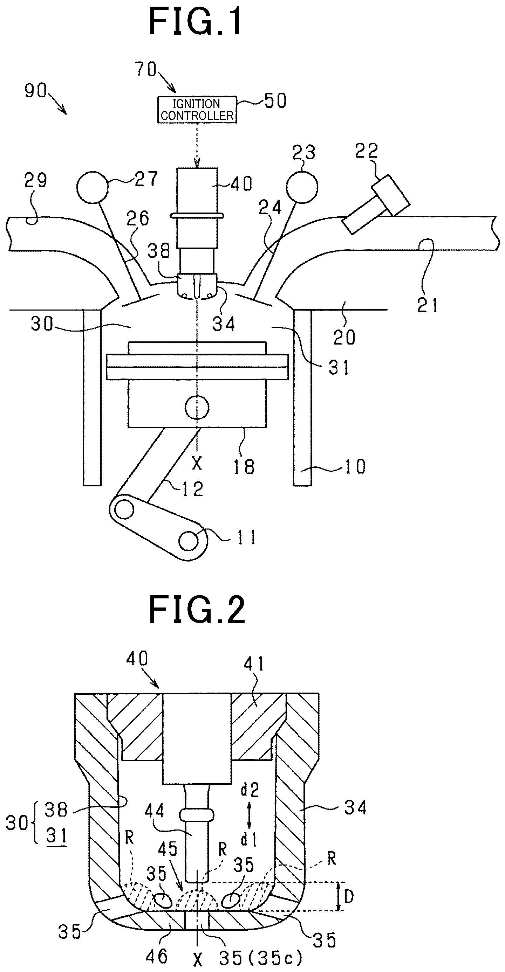

Fig. 1 is a cross sectional view which illustrates the engine 90 on which the ignition system 70 in this embodiment is mounted. The engine 90 is implemented by a four-stroke engine in which a piston completes one combustion cycle made up of a sequence of four separate strokes (i.e., 720° crank angle): intake stroke, compression stroke, expansion stroke, and exhaust stroke. In the following discussion, a top dead center between the compression stroke and the expansion stroke will be referred to as a compression stroke top dead center Td. The engine 90 includes the cylinder 10 and the head 20 mounted on the cylinder 10.

In the following discussion, a lengthwise direction of the center line X of the cylinder 10 illustrated in the drawings will be referred to as a vertical direction. The engine 90 and/or the ignition system 70 may be optionally oriented in various directions. For instance, the engine 90 and/or the ignition system 70 may be oriented to have the center line X which extends obliquely to the vertical direction or alternatively extends the horizontal direction.

The cylinder 10 has the piston 18 disposed therein. The piston 18 is connected to the crankshaft 11 through the link 12 and reciprocates vertically following rotation of the crankshaft 11. Space surrounded by an upper surface of the piston 18, an inner peripheral surface of the cylinder 10, and a lower surface of the head 20 defines the combustion chamber 30.

The head 20 has formed therein the intake path 21 through which air is inducted into the combustion chamber 30 and the exhaust path 29 from which gas discharged from the combustion chamber 30. The intake path 21 has the intake valve 24 installed therein. The exhaust path 29 has the exhaust valve 26 installed therein. The intake valve 24 is driven by the intake cam 23, while the exhaust valve 26 is driven by the exhaust cam 27. The head 20 has the fuel injector 22 mounted in the intake path 21. The fuel injector 23 works to spray fuel.

The ignition system 70 is equipped with the dividing wall 34, the spark plug 40, and the ignition controller 50. The ignition controller 50 is implemented by a portion of an electronic control unit (ECU) and works to analyze information derived by sensors installed in the engine 90 to control an operation of the spark plug 40. The sensors include, for example, a crank angle sensor, a knock sensor, an intake pressure sensor, an exhaust pressure sensor, an in-cylinder pressure sensor, and a catalyst temperature sensor.

Fig. 2 is a cross sectional view which illustrates the prechamber 38 and a region therearound. The spark plug 40 includes the first electrode 44 and the porcelain insulator 41 disposed around the outer periphery of the first electrode 44. The dividing wall 34 is secured to a lower end portion of the porcelain insulator 41. The dividing wall 34 defines the prechamber 38 and the main chamber 31. The pre-chamber 38 is located inside the diving wall 34. The main chamber 31 is located outside the dividing wall 34. In other words, the dividing wall 34 isolates the combustion chamber 30 of the engine 90 into the main chamber 31 and the pre-chamber 38. The dividing wall 34 has formed therein a plurality of spray holes 35 communicating between the main chamber 31 and the pre-chamber 38. The dividing wall 34 is made from an electrically conductive material and functions as the second electrode 46 of the spark plug 40. The spark plug 40 is subjected to application of voltage across the spark gap 45 between the first electrode 44 and the second electrode 46 to create an electric spark *f* which ignites the fuel.

More specifically, the spark plug 40 is equipped with a primary coil and a secondary coil. By applying an electrical current to the primary coil, electromagnetic energy is charged in the primary coil. Subsequently, stopping the application of current will cause the electromagnetic energy stored in the primary coil to induce voltage at the secondary coil. The induced voltage is then applied to the spark gap 45 to create the spark *f* within the spark gap 45. The time when the application of current to the primary coil is stopped will, therefore, coincide with an ignition timing Ts when the voltage starts to be applied across the spark gap 45 to initiate ignition of fuel.

In the following discussion, one of the spray holes 35 which lies on the center line X of the cylinder 10 will also be referred to as the center spray hole 35c. The center spray hole 35c extends vertically through the thickness of the dividing wall 34. The first electrode 44 has a lower end located just above the center spray hole 35c. In other words, the lower portion of the first electrode 44 protrudes greatly downward from the lower end the porcelain insulator 41, so that it is located closest to the center spray hole 35c among the spray holes 35. The gap between the lower end of the first electrode 44 and an upper periphery of the center spray hole 35c in the dividing wall 34 defines the spark gap 45. The spray holes 35 other than the center spray hole 35c are arranged around the center spray hole 35c in the dividing wall 34. The center spray hole 35c and the other spray holes 35 may be designed to be identical or different in sectional area or configuration with or from each other.

In a normal mode of operation, the ignition system 70 executes a before-top-dead-center ignition control mode to ignite fuel before the compression stroke top dead center *Td*. Alternatively, when a given operating condition of the engine 90, e.g., a fast idling mode of operation to warm up a catalyst installed in the exhaust path 29, is entered, the ignition system 70 executes an after-top dead center ignition control mode to ignite fuel after the compression stroke top dead center *Td*.

In the following discussion, a gas flow passing through the spark gap 45 will also be referred to as an in-gap gas flow. A direction from the first electrode 44 toward the center spray hole 35c will also be referred to as a spray hole direction *d1*. A direction opposite to the spray hole direction *d1* will also be referred to as a spray hole opposite direction *d2*. In this embodiment, the spray hole direction *d1* represents a downward direction. The spray hole opposite direction *d2* represents an upward direction. A direction including the spray hole direction *d1* as a component will also be referred to below as a spray hole direction *d1*-side or merely referred to as the spray hole direction *d1*. A direction including the spray hole opposite direction *d2* as a component will also be referred to as a spray hole opposite direction *d2*-side or merely referred to as the spray hole direction *d2*.

After the after-top-dead-center ignition control mode is entered, in the ignition system 70, the in-gap gas flow is changed from the spray hole opposite direction *d2*-side to the spray hole direction *d1*-side until the ignition timing *Ts* is reached. At the ignition timing *Ts*, the in-gap gas flow is, therefore, oriented to the spray hole direction *d1*-side, thereby causing the spark *f* to be elongated toward the spray hole direction *d1*-side.

In the following discussion, the center of an opening of the center spray hole 35c which is exposed to the pre-chamber 38 will be also referred to below as a spray hole center. A region located within the pre-chamber 38 at an interval of 3mm or less away from the spray hole will be referred to below as a spray hole-nearby region *R*.

When it is required to execute the after-top-dead-center ignition control mode, the ignition system 70 works at an early stage within a crank angle of 20° following the ignition timing *Ts* to place an ignition source in the form of a flame kernel large in size enough to self-grow in the spray hole-nearby region *R*, the center spray hole 35c, or the main chamber 31. In the flowing discussion, "in the spray hole-nearby region *R*, the center spray hole 35c or the main chamber 31" will be generally referred to as "in the spray hole-nearby region *R*, etc.".

In this disclosure, "the size of the flame kernel large enough to self-grow" means that the flame kernel which will spread without being extinguished by heat loss or lean mixture in the combustion chamber even when application of voltage to the spark gap 45 is stopped. More specifically, the size of a flame kernel large enough to self-grow refers to a diameter of about 0.5 to 1.0mm.

The placement of the ignition source within the spray hole-nearby region *R,* etc. in the early stage is achieved by selecting a spray hole distance *D* that is a distance between the first electrode 44 and the center spray hole 35c, a prechamber volume *V* that is a volume of the pre-chamber 38, a total spray hole area *S* that is the sum of sectional areas of all the spray holes 35 formed in the dividing wall 34, and/or a discharge voltage that is a voltage applied across the spark gap 45. This will be described below in detail. In the case were the spray holes 35 are partially constricted, so that a sectional area of each of the spray holes 35 is ununiform, the smallest sectional area of each of the spray holes 35 will be simply referred to as a sectional area of each of the spray holes 35.

First, the spray hole distance *D* will be described. The shorter the spray hole distance *D*, the greater the effects of flows of gas passing through the center spray hole 35c on a flame kernel. This facilitates the growth of the flame kernel, especially, in the spray hole-nearby region *R*, etc., and its peripheral region. For this reason, the shorter the spray hole distance *D*, the easier the creation of an ignition source in the spray hole-nearby region *R*, etc., in the early stage.

Next, the prechamber volume *V* and the total spray hole area *S* will be described in detail. The more the prechamber volume *V*, the faster a flow of gas moving through the center hole 35c in the after-top-dead-center ignition control mode. This is because the larger the prechamber volume *V*, the more slowly the pressure in the pre-chamber 38 drops following a drop in pressure in the main chamber 31 as long as the flow rate of gas moving out of the pre-chamber 38 into the main chamber 31 is kept constant, thereby resulting in an increased difference in pressure between the pre-chamber 38 and the main chamber 31, which increases the velocity of gas passing through the center spray hole 35c.

The smaller the total spray hole area *S,* the faster the velocity of gas flowing through the center spray hole 35c will be in the after-top-dead-center ignition control mode. This is because as long as the prechamber volume *V* remains unchanged, the smaller the total spray hole area S, the smaller the flow rate of gas moving out of the pre-chamber 38 into the main chamber 31 will be, thereby causing a drop in pressure in the pre-chamber 38 to become slow following a drop in pressure in the main chamber 31. This results in an increased difference in pressure between the pre-chamber 38 and the main chamber 31, which increases the velocity of gas passing through the center spray hole 35c.

The increase in velocity of gas passing through the center spray hole 35c will facilitate the elongation of the spark *f* to the spray hole direction *d1*-side. This facilitates the growth of a flame kernel in the early stage, especially, in the spray hole-nearby region *R*, etc. and its peripheral region. When it comes to the prechamber volume *V* and the total spray hole area *S*, the smaller a spray hole ratio (*S/V*) that is a ratio of the total spray hole area *S* to the prechamber volume *V*, the more easily the ignition source is created in the spray hole-nearby region *R*, etc. at the early stage.

Next, the discharge voltage will be described below. The higher the discharge voltage, the easier a flame kernel is to grow. Additionally, the higher the discharge voltage, the higher the stability of the flame kernel, thereby facilitating the ease with which the spark *f* is elongated by the gas flow into the spray hole-nearby region *R*, etc. or its peripheral region.

Consequently, the higher the discharge voltage, the more easily the ignition source is created in the spray hole-nearby region R, etc. at the early stage.

As apparent from the above discussion, the smaller the spray hole distance D or the spray hole ratio (S/V) or the higher the discharge voltage, the more easily the ignition source is created in the spray hole-nearby region R, etc. at the early stage. Too small the spray hole distance D or the spray hole ratio (S/V) or too high the discharge voltage will, however, result in another adverse effect. In this embodiment, the early creation of the ignition source in the spray hole-nearby region R, etc. is achieved by decreasing the spray hole distance D or the spray hole ratio (S/V) and/or increasing the discharge voltage to an extent that no above adverse effect occurs.

The creation of an ignition source in the spray hole-nearby region R or the spray holes 35 usually causes a flame grown from the ignition source to be quickly jetted into the main chamber 31. The creation of an ignition source within the main chamber 31 causes a flame grown from the ignition source to propagate directly into the main chamber 31. Such cases achieve the quick propagation of a flame into the main chamber 31.

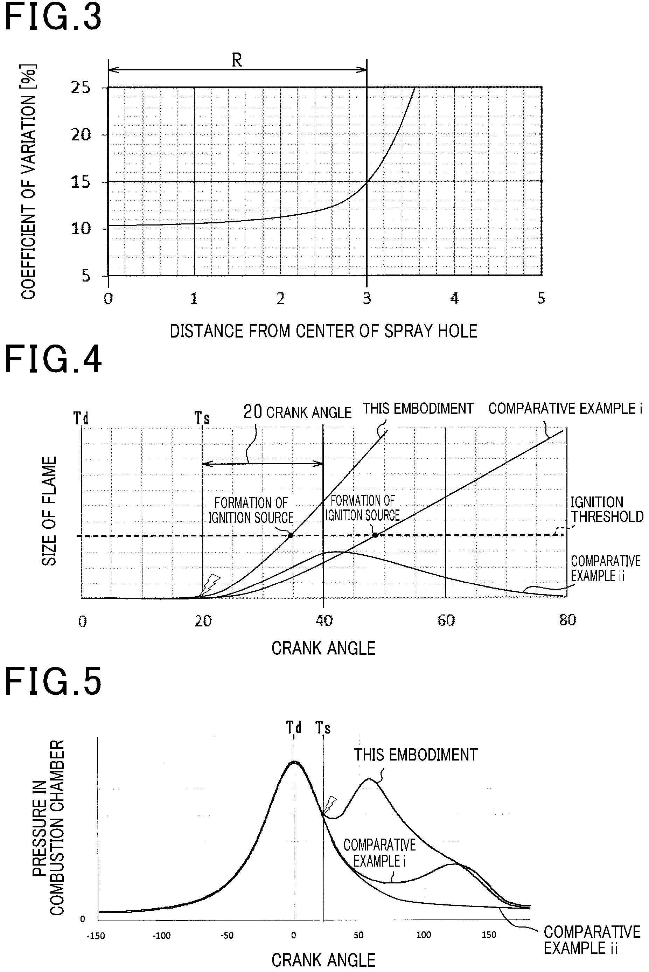

Fig. 3 is a graph which represents a relation between the distance between an ignition source and the spray hole center and a combustion stability index (which will also be referred to below as a coefficient of variation). The coefficient of variation is an index indicating a degree of fuel combustion in a range of the lowest stability of combustion of fuel, i.e., a misfire to the highest stability of combustion of fuel, i.e., complete combustion of fuel. The higher value of the coefficient of variation represents the higher stability of combustion of fuel. The graph in Fig. 3 shows that the greater the distance between the ignition source and the spray hole center, the greater the coefficient of variation will be and that when the ignition source is located 3mm or more away from the spray hole center, the coefficient of variation will become large at an increased rate. In view of such a relation between the coefficient of variation and the distance between the ignition source and the spray hole center, the ignition source is arranged in the spray hole-nearby region R which lies 3mm or less away from the spray hole center.

Fig. 4 is a graph which represents the growth of a flame kernel and shows that this embodiment achieves faster growth of a flame kernel than in comparative examples *i* and *ii* and also that the propagation of a flame is faster in this embodiment than in the comparative examples *i* and *ii*. It is also found that when a flame kernel, like in this embodiment and the comparative example *i*, has grown up to a given ignition threshold, it will be enabled to grow by itself and spread, while when a flame kernel, like in the comparative example *ii*, has not grown to the ignition threshold, it will have difficulty growing by itself, so that the flame disappears.

Fig. 5 is a graph which demonstrates a change in pressure in the combustion chamber and shows that the pressure raises with advance of the crank angle before the compression stroke top dead center Td and then drops with advance of the crank angle after the compression stroke top dead center Td in each of this embodiment and the comparative examples *i* and *ii*. The graph also shows that upon ignition, the pressure will rise again in this embodiment and the comparative example *i*. The flame kernel grows faster in this embodiment than in the comparative example *i*, and the propagation of the flame is faster in this embodiment than in the comparative example *i*, thereby causing the pressure in the combustion chamber to elevate quickly in this embodiment. Conversely, when the flame burns out, like in the comparative example, it will cause the pressure in the combustion chamber not to rise.

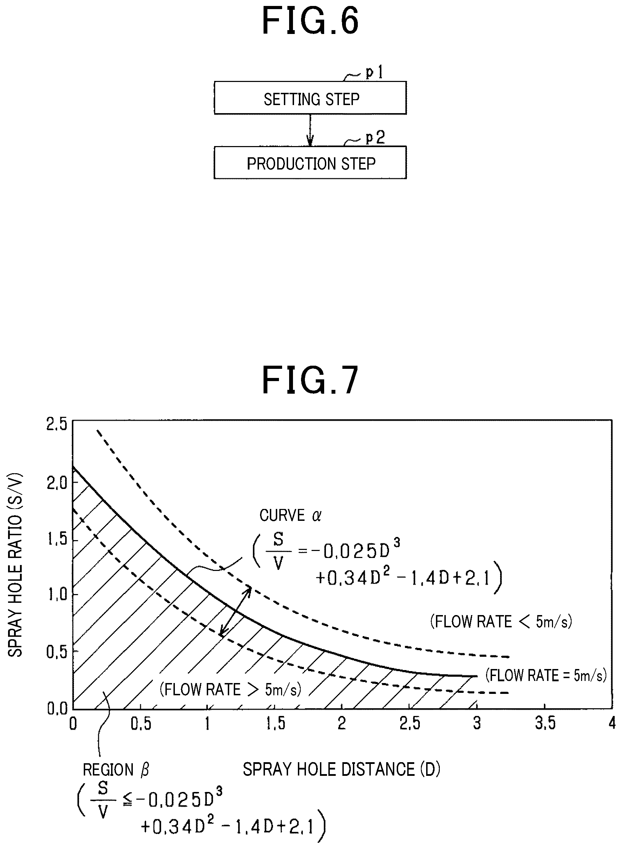

Fig. 6 is a view which shows a flowchart of a sequence of steps in a production process for the ignition system 70. The production process incudes a setting step *p1* and a production step *p2*.

In the setting step *p1*, a spray hole ratio (S/V) is calculated. The dimensions of the pre-chamber 38 and the spray holes 35 are determined as a function of the spray hole ratio (S/V) and the spray hole distance D. The setting step *p1* will also be described below in detail with reference to Fig. 7. Next, in the production step *p2*, the ignition system 70 is produced to have the dimensions set in the setting step *p1*.

Fig. 7 is a graph which represents a relation among the spray hole distance, the spray hole ratio, and the in-gap gas flow. The horizontal axis indicates the spray hole distance D. The vertical axis indicates the spray hole ratio (S/V). The curve *a* represents a relation between the spray hole ratio (S/V) and the spray hole distance D when the in-gap gas flow in the spray hole direction *d1* is 5m/s at the ignition timing in the after-top-dead-center ignition control mode. The curve *a* may be mathematically expressed using the following approximation formula A.

$$S/V = -0.025D^3 + 0.34D^2 - 1.4D + 2.1 \qquad \mathrm{Eq.}\ A$$

where V denotes the prechamber volume V [cc (cubic centimeter)], S denotes the total spray hole area (i.e., a total sectional area of the spray holes 35) [mm^2], D denotes the spray hole distance D [mm], and "^" represents a power. Note that "^3" is a cube, and "^2" represents a square.

On the upper side above the curve *a*, the in-gap gas flow at the ignition timing Ts in the after-top-dead-center ignition control mode is lower than 5m/s in the spray hole direction *d1*, while on the lower side below the curve *a*, the in-gap gas flow at the ignition timing Ts in the after-top-dead-center ignition control mode is higher than 5m/s in the spray hole direction *d1*.

In this embodiment, in order to have the in-gap gas flow in the spray hole direction $d1$ which is higher than or equal to 5m/s at the ignition timing $Ts$ in the after-top-dead-center ignition control mode, the value of the spray hole ratio ($S/V$) is selected in a region $\beta$ including the curve $a$ and the lower side below the curve $a$. In other words, the value of the spray hole ratio ($S/V$) is determined to meet the following Eq. $B$ which is equivalent to Eq. $A$ in which "=" is replaced by "≤".

$$S/V \leq -0.025D^3 + 0.34D^2 - 1.4D + 2.1 \qquad \text{Eq. } B$$

Eq. $B$ sets the in-gap gas flow in the spray hole direction $d1$ to be higher than or equal to 5m/s at the ignition timing $Ts$ in the after-top-dead-center ignition control mode.

The curve $a$ usually changes with a change in environment. For instance, when the speed of rotation of the engine 90 becomes high, the quantity of intake air increases, or the engine 90 is implemented by a high-compression engine, the curve $a$ will be shifted to an upper right-hand side in Fig. 7. Alternatively, when the speed of rotation of the engine 90 becomes low, the quantity of intake air decreases, or the engine 90 is implemented by a low-compression engine, the curve $a$ will be shifted to a lower left-hand side in Fig. 7. In such a case, it is advisable that Eq. $B$ be corrected as needed.

However, in the absence of the above correction, the acceptable in-gap gas flow is expected to be obtained at the ignition timing $Ts$ in the after-top-dead-center ignition control mode during the fast idle mode of engine operation in which the speed of the engine, the quantity of intake air, and the compression ratio are normal.

However, when the spray hole ratio ($S/V$) is lower than 0.3, it causes a risk that too strong a gas flow may pass through the spray holes 35, so that the flame is blown away. It is, therefore, preferable that the spray hole ratio ($S/V$) be selected to be 0.3 or more. When the spray hole distance $D$ is zero in Eq. $B$, the right side will be 2.1. Satisfying Eq. $B$, therefore, requires selecting the value of the spray hole ratio ($S/V$) to be 2.1 or less. Consequently, the value of the spray hole ratio ($S/V$) is determined to meet the following Eq. $C$ in addition to Eq. $B$.

$$0.3 \leq S/V \leq 2.1 \qquad \text{Eq. } C$$

More specifically, it is advisable that the diameter of each of the spray holes 35 be selected to be 0.3mm or more in order to eliminate a risk that a flame passing through each of the spray holes 35 may disappear due to thermal loss thereof. It is also advisable that the prechamber volume $V$ be selected to be 0.2cc or more in order to ensure an amount of gas jetting from the prechamber 38 (i.e., the quantity of heat) large enough to enhance the propagation of a flame within the main chamber 31.

The spray hole distance $D$ is preferably selected in light of blowing out of the spark $f$ or the amount of electrical power consumed by the spark plug 40 as a function of the size of the spark gap 45 because the spray hole distance $D$ impinges on the size of the spark gap 45. The area of a cross section of the center spray hole 35c is also preferably selected in light of adverse effects thereof on the spark gap 45. The spray hole ratio ($S/V$) is preferably determined by selecting cross-sectional areas of the spray holes 35 other than the center spray hole 35c.

In the setting step $p1$ in Fig. 6, the spray hole ratio ($S/V$) is set in the above way. Physical parameters of the spark plug 40 other than the spray hole ratio ($S/V$) may be determined in a known manner. In the production step $p2$, the ignition system 70 are made to meet the dimensions or parameters determined in step $p1$ to complete the ignition system 70.

The functions of the ignition system 70 in this embodiment will be described below.

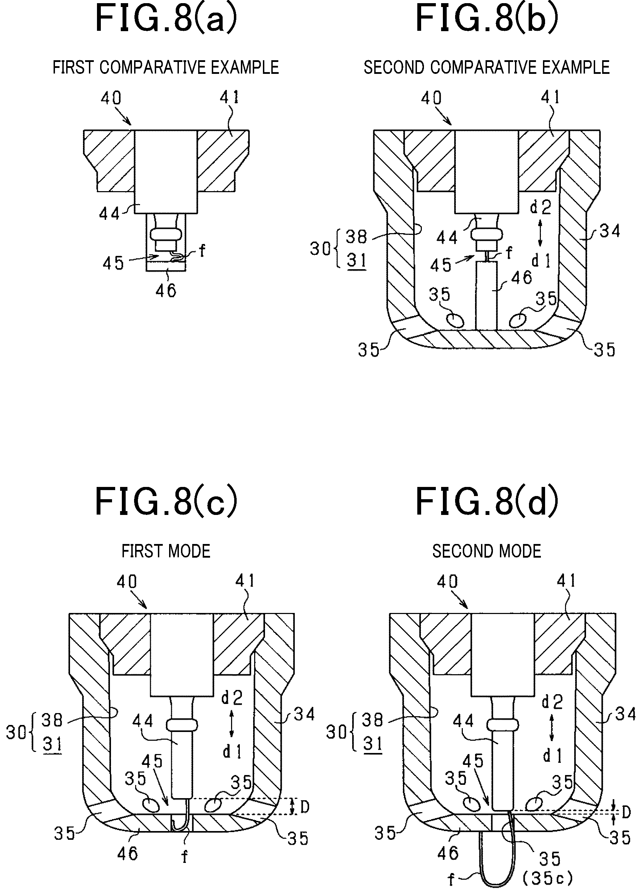

Fig. 8(a) is a sectional view which illustrates the ignition system 70 in the first comparative example which is different from this embodiment in that there is no dividing wall 34, but the second electrode 46 (i.e., ground electrode) is arranged alone. Fig. 8(b) is a sectional view which illustrates the ignition system 70 in the second comparative example which is different from the first comparative example in that it includes the dividing wall 34, but does not have the center spray hole 35c. The first electrode 44 does not protrude downward more than in this embodiment, but instead the second electrode 46 (i.e., ground electrode), unlike this embodiment, protrude greatly from the dividing wall 34 toward the first electrode 44 (i.e., center electrode). The second comparative example is designed not to meet the above Eq. $B$. In the second comparative example which, as described above, does not have the center spray hole 35c, the center of gravity of the spray holes 35 located closest to each other lies beneath the spark gap 45. The downward direction in the second comparative example will be, therefore, referred to, like this embodiment, as the spray hole direction $d1$, while the upward direction will be referred to as the spray hole opposite direction $d2$.

Fig. 8(c) is a sectional view which illustrates the ignition system 70 in the first mode of this embodiment. Fig. 8(d) is a sectional view which illustrates the ignition system 70 in the second mode of this embodiment. The spray hole ratio ($S/V$) or the spray hole distance $D$ in the first mode is smaller than that in the second mode. The spray hole distance $D$ in Fig. 8(d) is shorter than that in Fig. 8(c), thereby causing the in-gap gas flow in the spray hole direction $d1$ to be greater in the second mode than in the first mode at the ignition timing $Ts$ in the after-top-dead-center ignition control mode. Consequently, an initial ignition source is generated in the pre-chamber 38 and/or the center spray hole 35c in the first mode, while it is created in the pre-chamber 38, the center spray hole 35c, and/or the main chamber 31 in the second mode.

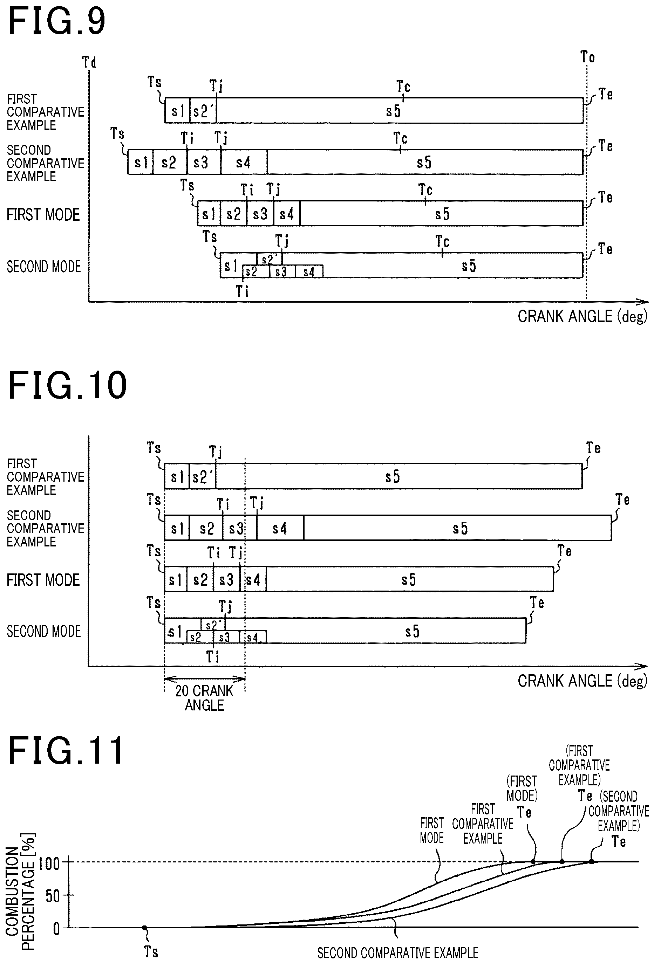

Fig. 9 is a timing chart which demonstrates the development of combustion of fuel in the after-top-dead-center ignition control mode in the first and second comparative examples. In the first comparative example, the combustion of fuel proceeds from the spark phase s1, to the main chamber ignition phase s2', and then to the main chamber flame propagation phase s5. The beginning of the spark phase s1 occurs at the ignition timing Ts. The spark phase s1 is a phase in which the voltage has started to be applied across the spark gap 45, but a flame kernel is not yet generated in the combustion chamber 30.

The main chamber ignition phase s2' is a phase in which a flame kernel is growing to a self-growable ignition source within the main chamber. The end of the main chamber ignition phase s2' coincides with the main chamber ignition timing $Tj$ that is the timing when an ignition source is created within the main chamber 31. The main chamber flame propagation phase s5 is a phase in which the ignition source is propagating to the main chamber 31. The end of the main chamber flame propagation phase s5 coincides with the combustion end timing $Te$ when the fuel is expected to have been burned completely.

In the second comparative example and the first mode, the combustion of fuel proceeds from the spark phase s1 to the pre-chamber ignition phase s2, to the pre-chamber flame propagation phase s3, to the gas jetting phase s4, and then to the main chamber flame propagation phase s5. The prechamber ignition phase s2 is a phase in which a flame kernel is growing to a self-growable ignition source in the pre-chamber. The end of the pre-chamber ignition phase s2 coincides with the pre-chamber ignition timing $Ti$ that is the timing when the ignition source is created in the pre-chamber 38.

The pre-chamber flame propagation phase s3 is a phase in which the ignition source is propagating to the pre-chamber 38. The flame jetting phase s4 is a phase in which a flame in the pre-chamber 38, that is, an ignition source is jetting from each of the spray holes 35 into the main chamber 31. The beginning of the flame jetting phase s4 coincides with the main chamber ignition timing $Tj$ that is the timing when the ignition source is placed in the main chamber 31.

In the second mode, the spark $f$ extends from inside the pre-chamber 38 into the main chamber 31 through the center spray hole 35c, thereby causing ignition sources to be created by the spark $f$ within the main chamber 31 as well as the prechamber 38 and the center spray hole 35c. Consequently, like in the first mode, the combustion of fuel proceeds from the spark phase s1, to the main chamber ignition phase s2', and then to the main chamber flame propagation phase s5 in parallel to a series of ignition source development from the spark phase s1, to the pre-chamber ignition phase s2, to the pre-chamber flame propagation phase s3, to the flame jetting phase s4, and then the main chamber flame propagation phase s5. This causes the main chamber ignition timing $Tj$ to appear earlier than in the first mode.

In each of the first and second comparative examples and each of the first and second modes, the combustion end timing $Te$ is required to be earlier than the exhaust start time $To$ that is the time when the exhaust valve 26 starts to open in order to avoid emission of unburned fuel. Accordingly, in any case, the combustion end timing $Te$ is first determined prior to the exhaust start time $To$. Subsequently, the ignition timing $Ts$ is determined to have fuel completely combusted at the combustion end timing $Te$. In other words, the ignition timing Ts is calculated back from the combustion end timing $Te$. Therefore, the combustion end timings $Te$ almost coincide with each other in the first and second comparative examples and the first and second modes, while the ignition timings $Ts$ are different from each other.

Fig. 10 is a graph which demonstrates the timing chart illustrated in Fig. 9 where the ignition timings $Ts$ in the first and second comparative examples and the first and second modes are altered to coincide with each other for the sake of convenience. In the second comparative example, the spark gap 45 is located away from the spray holes 35, so that the ignition source is arranged within the spray hole-nearby region $R$ near the end of the pre-chamber flame propagation phase s3. The end of the pre-chamber flame propagation phase s3 in the second comparative example substantially coincides with a time, a crank angle of 20° or more after the ignition timing $Ts$. In the second comparative example, the ignition source is arranged within the spray hole-nearby region $R$ at a time, a crank angle of 20° or more after the ignition timing $Ts$. This causes the main chamber ignition timing $Tj$ to retard, so that the development of combustion of fuel becomes slower than that in the first comparative example which does not include the prechamber 38.

In the first mode of this embodiment, the spark gap 45 is located closer to the center spray hole 35c, thereby causing the time when the ignition source appears in the spray hole-nearby region R to lie in the first half of the pre-chamber flame propagation phase s3. The first half of the pre-chamber flame propagation phase s3 in the first mode lies within a crank angle of 20° after the ignition timing $Ts$. The ignition source, therefore, appears in the spray hole-nearby region $R$ within a crank angle of 20° after the ignition timing $Ts$. This results in smaller delay in the main chamber ignition timing $Tj$ than in the first comparative example, so that the development of combustion of fuel becomes faster than that in the first comparative example which does not include the pre-chamber 38.

In the second mode of this embodiment, the time when the ignition source is created by the spark $f$ within the main chamber 31 coincides with the main chamber ignition timing $Tj$ corresponding to the end of the main chamber ignition phase s2'. The main chamber ignition timing $Tj$ in the second mode lies within a crank angle of 20° after the ignition timing $Ts$. This causes the ignition source to appear in the main chamber 31 within a crank angle of 20° after the ignition timing $Ts$, so that the development of combustion of fuel becomes faster than in the first mode.

Fig. 11 is a graph which demonstrates transitions in combustion percentage in the first and second comparative examples, and the first mode of this embodiment. In the second comparative example, the percentage of combustion of fuel, as described above, changes more slowly than in the first comparative example which does not include the pre-chamber 38, while it changes in the first mode of this embodiment faster than in the first comparative example.

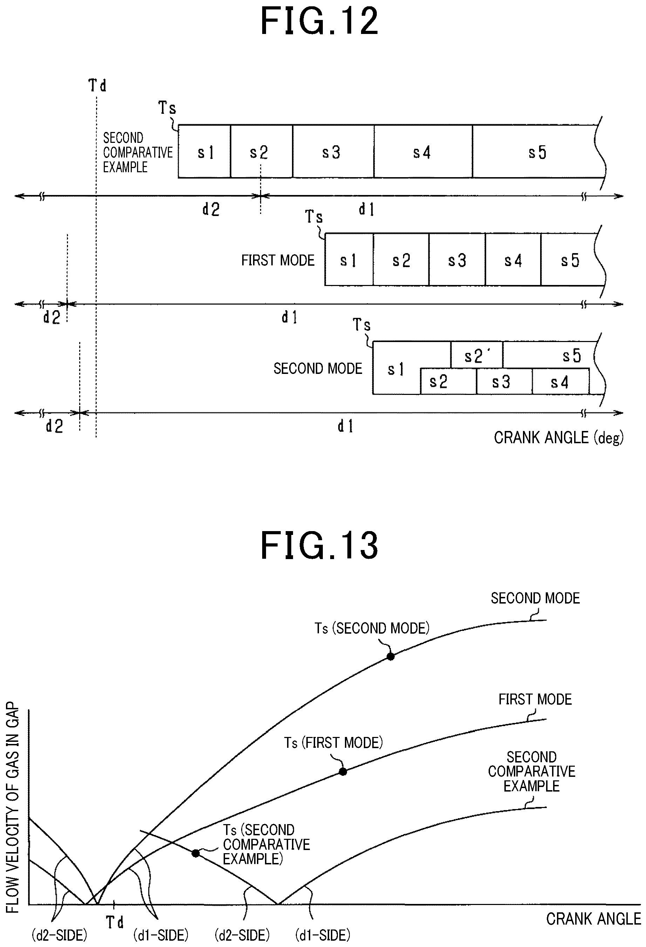

Fig. 12 is a graph which illustrates an enlarged portion of Fig. 9. Fig. 13 is a graph which demonstrates transitions in the in-gap gas flow in a period illustrated in Fig. 13 in the second comparative example and the first and second modes of this embodiment. In the second comparative example, the in-gap gas flow is still oriented in the spray hole opposite direction d2 at the ignition timing Ts in the after-top-dead-center ignition control mode. This is because the in-gap gas flow is kept oriented by inertia thereof in the spray hole opposite direction *d2* in a deep portion of the pre-chamber 38 for a while after the compression stroke top dead center *Td* is passed. Subsequently, the strength of the in-gap gas flow temporarily becomes zero, after which the direction of the in-gap gas flow turns in the spray hole direction *d1.* The gas flow in such a period of time is, therefore, very weak, so that the spark *f* does not extend sufficiently, thus facing a risk of failure in igniting the fuel.

In the first and second modes of this embodiment, the in-gap gas flow, as described above, has already turned from the spray hole opposite direction *d2* to the spray hole direction *d1* before the ignition timing *Ts* in the after-top-dead-center ignition control mode. This causes a strong flow of gas to be created, for example, at 5m/s or more in the spray hole direction *d1* at the ignition timing *Ts,* thereby facilitating extension of the spark *f* in the spray hole direction *d1,* which enhances the growth of a flame kernel in or around the spray hole-nearby region *R.* Consequently, the first and second modes of this embodiment are capable of creating the ignition source quickly within the spray hole-nearby region *R.*

Referring back to Fig. 9, the combustion end timing *Te* is, as described above, required to be earlier than the exhaust start time *To.* It is, therefore, impossible to retard the ignition timing *Ts* sufficiently in the fast idling mode in which the timing of fuel combustion needs to be as late as possible in the first and second comparative examples in which a combustion time period that is an interval between the ignition timing *Ts* and the combustion end timing *Te,* thereby resulting in a difficulty in sufficiently retarding the combustion center-of-gravity *Tc* that is equivalent to a time when 50% of fuel has been combusted, which may lead to a lack in warming the catalyst in the fast idling mode.

In contrast to the above, the first and second modes of this embodiment are capable of shortening the combustion period of time that is an interval between the ignition timing *Ts* and the combustion end timing *Te* as compared with the first and second comparative examples, thereby enabling the ignition timing *Ts* to be retarded sufficiently. This permits the combustion center-of-gravity *Tc* to be retarded greatly as compared with the first and second comparative examples, thereby ensuring the stability in warning the catalyst in the fast idling mode, which leads to a decreased duration of the fast idling mode to improve the fuel consumption in the engine 90 and reduce exhaust emissions from the engine 90.

This embodiment offers the following beneficial advantages. In the after-top-dead-center ignition control mode, the ignition source is created in the spray hole-nearby region *R,* the center spray hole 35c, or the main chamber 31 shown in Fig. 2 early, e.g., within a crank angle of 20° following the ignition timing *Ts.* When the ignition source is arranged in the spray hole-nearby region *R* or the center spray hole 35c, it facilitates the jetting of a flame, as grown from the ignition source, from the center spray hole 35c into the main chamber 31. Alternatively, when the ignition source is provided in the main chamber 31, it will cause a flame grown from the ignition source to propagate as it is in the main chamber 31. It is, therefore, possible to propagate the flame quickly to or in the main chamber 31 in the after-top-dead-center ignition control mode.

The second mode of this embodiment offers the following beneficial advantages. In the after-top-dead-center ignition control mode in the second mode, the spark *f* is extended to reach the inside of the main chamber 31, thereby creating the ignition source within the main chamber 31 at an early point within a crank angle of 20° after the ignition timing. The flame, as growing from the ignition source, propagates as it is to the main chamber 31. The second mode, therefore, ensures quick propagation of the flame to the main chamber 31.

Additionally, the dimensions of the pre-chamber 38 and the spray holes 35 are selected to meet the above Eq. *B* in order to have the spray hole ratio (*S/V*) falling in the region $\beta$ illustrated in Fig. 7. The region $\beta$ is, as described above, a region where the in-gap gas flow at the ignition timing *Ts* in the after-top-dead-center ignition control mode moves at 5m/s or more in the spray hole direction *d1*. The in-gap gas flow which moves at 5m/s or more in the spray hole direction *d1,* as already described, serves to facilitate early creation of the ignition source in the spray hole-nearby region *R*.

The region $\beta$ depends slightly on the circumferences, but however, is expected to produce a required degree of the in-gap gas flow at the ignition timing *Ts* in the after-top-dead-center ignition control mode when the engine 90 is operated at a usual speed, with a usual quantity of intake air, and at a usual compression ratio. The quick creation of the ignition source in the spray hole-nearby region *R* is, therefore, achieved easily by selecting the spray hole ratio (*S/V*) to lie in the region $\beta$.

The second mode also has the following beneficial advantage. When the spray hole ratio (*S/V*) is less than 0.3, it will, as described above, result in too strong a flow of gas passing through the spray holes 35, thereby undesirably blowing away the flame. This embodiment is, as described above, configured to set the spray hole ratio (*S/V*) to be 0.3 or more, thus eliminating the above problem.

The second mode also has the following beneficial advantage. The in-gap gas flow, as can be seen in Fig. 13, turns from the spray hole opposite direction *d2* (i.e., the spray hole opposite direction *d2*-side) to the spray hole direction *d1* (i.e., the spray hole opposite direction *d1*-side) until the ignition timing *Ts* is reached in the after-top-dead-center ignition control mode. This causes the in-gap gas flow to be oriented in the spray hole direction *d1* at the ignition timing *Ts* in the after-top-dead-center ignition control mode, thereby ensuring the stability in extending the spark *f* in the spray hole direction *d1.* This facilitates the quick creation of an ignition source within the spray hole-nearby region *R*.

OTHER EMBODIMENTS

The above described modes of this embodiment may be modified in the following ways. In the first embodiment, the dividing wall 34 has a plurality of spray holes 35 formed therein, but may alternatively be designed to have only the single center spray 35c. The first embodiment has the first electrode 44 located closest to the center spray hole 35c, but however, may alternatively be designed to arrange the first electrode 44 closest to one(s) of the other spray holes 35 to extend the spark *f* toward it. The dividing wall 34 in the first embodiment also works as the second electrode 46 and is attached to the head 20 in electrical conduction therewith, but however, it may be configured to have a protrusion(s) which is in electrical conduction to the dividing wall 34 and serves as the second electrode 46. Alternatively, the second electrode 46 may be made of a member which is discrete from the dividing wall 34 and electrically connects with the head 20.

The first embodiment has the dividing wall 34 secured to the porcelain insulator 41 of the spark plug 40, but however, the dividing wall 34 may alternatively be attached to the head 20. Additionally, the spark plug 40 may be arranged to have the porcelain insulator 41 arranged in engagement with the dividing wall 34 of the head 20.

**Claims**

1. An ignition system comprising:

    a dividing wall (34) which divides a combustion chamber (30) of an engine (90) into a main chamber (31) and a prechamber (38) and has formed therein at least one spray hole (35) which communicates between the main chamber (31) and the pre-chamber (38); and
    a spark plug (40) in which voltage is applied across a spark gap (45) between a first electrode (44) and a second electrode (46) to create an electrical spark (*f*) to ignite fuel, wherein
    the pre-chamber (38) houses the spark plug (40) with the first electrode (44),
    the dividing wall (34) or a member which is electrically connected to the dividing wall (34) has the second electrode (46),
    an after-top-dead-center ignition control mode in which an ignition operation to ignite the fuel using the spark plug (40) is performed after a compression stroke top dead center (*Td*) is executed when a given operating condition of the engine (90) is met, and
    in the after-top-dead-center ignition control mode, an ignition source which is in a form of a self-growable flame kernel is provided in a spray hole-nearby region (*R*) within the pre-chamber (38), the spray hole (35), or the main chamber (31) within a crank angle of 20° after an ignition timing (*Ts*) where the ignition timing (*Ts*) is a timing when the voltage starts to be applied across the spark gap (45), and the spray hole-nearby region (R) is a region which is located 3mm or less away from a spray hole center that is a center of an opening of the spray hole (35) which faces the pre-chamber (38), **characterized in that**
    a relation of $S/V \leq -0.025D^3 + 0.34D^2 - 1.4D + 2.1$ is met where *V* is a volume of the pre-chamber (38) in units of cubic centimeter, *S* is a total sectional area of the at least one spray hole (35) in the dividing wall (34) in units of mm^2, and *D* is a distance between the first electrode (44) and spray hole (35) in units of mm or when the dividing wall (34) has a plurality of spray holes (35) formed therein, *D* denotes a distance between the first electrode (44) and one (35s) of the spray holes (35) which is located closest to the spark gap (45).

2. The ignition system as set forth in claim 1, wherein in the after-top-dead-center ignition control mode, the spark is extended to reach inside the main chamber (31) to provide the ignition source in the main chamber (31) within a crank angle of 20° after the ignition timing (*Ts*).

3. The ignition system as set forth in claim 1 or 2, wherein a gas flow passes through the spark gap (45) at a speed of 5m/s or more in a period of time in which the spark is created in the after-top-dead-center ignition control mode.

4. The ignition system as set forth in any one of claims 1 to 3, wherein a relation of $0.3 \leq S/V \leq 2.1$ is met where *V* is a volume of the pre-chamber (38) in units of cubic centimeter, and *S* is a total sectional area of the spray hole (35) in the dividing wall (34) in units of mm^2.

5. The ignition system as set forth in any one of claims 1 to 4, wherein an in-gap gas flow turns from a spray hole (35) opposite direction side (*d2*) to a spray hole (35) direction side (*d1*) until the ignition timing (*Ts*) is reached in the after-top-dead-center ignition control mode to have the in-gap gas flow oriented to the spray hole (35) direction side (*d1*) at the ignition timing (*Ts*) where the spray hole (35) direction side (*d1*) represents a direction which includes, as a component, a spray hole (35) direction that is a direction oriented from the first electrode (44) to the spray hole (35), the spray hole (35) opposite direction side (*d2*) represents a direction which includes, as a component, a spray hole (35) opposite direction oriented opposite to the spray hole (35) direction, or when the dividing wall (34) has a plurality of spray holes (35), the spray hole (35) direction is a direction oriented from the first electrode (44) to one (35s) of the spray holes (35) which is located closest to the first electrode (44), and the in-gap gas flow denotes a flow of gas in the spark gap (45).

**Patentansprüche**

1. Zündsystem, aufweisend:

eine Trennwand (34), die eine Brennkammer (30) einer Maschine (90) in eine Hauptkammer (31) und eine Vorkammer (38) aufteilt, und in der zumindest ein Sprühloch (35) ausgebildet ist, das mit der Hauptkammer (31) und der Vorkammer (38) in Verbindung steht; und

eine Zündkerze (40), bei der Spannung über eine Funkenstrecke (45) zwischen einer ersten Elektrode (44) und einer zweiten Elektrode (46) angelegt wird, um einen elektrischen Funken (f) zum Zünden von Kraftstoff zu erzeugen, , wobei

die Vorkammer (38) die Zündkerze (40) mit der ersten Elektrode (44) aufnimmt,

die Trennwand (34) oder ein Element, das mit der Trennwand (34) elektrisch verbunden ist, die zweite Elektrode (46) aufweist,

ein Zündsteuermodus nach dem oberen Totpunkt, bei dem ein Zündvorgang zum Zünden des Kraftstoffs unter Verwendung der Zündkerze (40) durchgeführt wird, nachdem ein oberer Totpunkt (Td) eines Kompressionstakts ausgeführt wird, wenn eine bestimmte Betriebsbedingung der Maschine (90) erfüllt ist, und

wobei bei dem Zündsteuermodus nach dem oberen Totpunkt eine Zündquelle in Form eines selbst wachsenden Flammenkerns in einem Bereich (R) nahe dem Sprühloch innerhalb der Vorkammer (38), dem Sprühloch (35) oder der Hauptkammer (31) innerhalb eines Kurbelwinkels von 20 ° nach einem Zündzeitpunkt (Ts) vorgesehen wird, wobei der Zündzeitpunkt (Ts) ein Zeitpunkt ist, an dem die Spannung beginnt, über die Funkenstrecke (45) angelegt zu werden, und der Bereich (R) nahe dem Sprühloch ein Bereich ist, der sich 3 mm oder weniger von einer Sprühlochmitte entfernt befindet, bei der es sich um die Mitte einer Öffnung des Sprühlochs (35) handelt, die der Vorkammer (38) zugewandt ist,

**dadurch gekennzeichnet, dass**

ein Verhältnis $S/V \leq 0{,}025D^3 + 0{,}34D^2 - 1{,}4D + 2{,}1$ erfüllt ist, wobei V ein Volumen der Vorkammer (38) in Kubikzentimetern ist, S eine gesamte Querschnittsfläche des zumindest einen Sprühlochs (35) in der Trennwand (34) in Quadratmetern ist, und D eine Entfernung zwischen der ersten Elektrode (44) und dem Sprühloch (35) in mm ist, oder, wenn die Trennwand (34) eine Mehrzahl an Sprühlöchern (35) darin aufweist, D eine Entfernung zwischen der ersten Elektrode (44) und einem (35s) der Sprühlöcher (35), das sich am nächsten an der Funkenstrecke (45) befindet, bezeichnet.

2. Zündsystem nach Anspruch 1, wobei bei dem Zündsteuermodus nach dem oberen Totpunkt der Funke verlängert wird, um ins Innere der Hauptkammer (31) zu reichen, um die Zündquelle in der Hauptkammer (31) innerhalb eines Kurbelwinkels von 20 ° nach dem Zündzeitpunkt (Ts) bereitzustellen.

3. Zündsystem nach Anspruch 1 oder 2, wobei ein Gasstrom mit einer Geschwindigkeit von 5 m/s oder mehr in einer Zeitspanne durch die Funkenstrecke (45) hindurch verläuft, in der der Funke in dem Zündsteuermodus nach dem oberen Totpunkt erzeugt wird.

4. Zündsystem nach einem der Ansprüche 1 bis 3, wobei ein Verhältnis von $0{,}3 \leq S/V \leq 2{,}1$ erfüllt ist, wobei V ein Volumen der Vorkammer (38) in Kubikzentimetern ist und S eine gesamte Querschnittsfläche des Sprühlochs (35) in der Trennwand (34) in mm^2 ist.

5. Zündsystem nach einem der Ansprüche 1 bis 4, wobei ein Gasstrom in der Strecke sich von einer dem Sprühloch (35) gegenüberliegenden Seite (d2) zu einer Seite (d1) in Richtung des Sprühlochs (35) dreht, bis der Zündzeitpunkt (Ts) in dem Zündsteuermodus nach dem oberen Totpunkt erreicht ist, so dass der Gasstrom zu dem Zündzeitpunkt (Ts) in der Strecke auf die Seite (d1) in Richtung des Sprühlochs (35) ausgerichtet ist, wobei die Seite (d1) in Richtung des Sprühlochs (35) eine Richtung darstellt, die als Komponente eine Richtung des Sprühlochs (35) enthält, bei der es sich um eine von der ersten Elektrode (44) zu dem Sprühloch (35) ausgerichtete Richtung handelt, wobei die dem Sprühloch (35) gegenüberliegende Seite (d2) eine Richtung darstellt, die als Komponente eine dem Sprühloch (35) entgegengesetzte Richtung enthält, die gegenüber der Richtung des Sprühlochs (35) ausgerichtet ist, oder wenn die Trennwand (34) eine Mehrzahl an Sprühlöchern (35) aufweist, die Richtung des Sprühlochs (35) eine Richtung ist, die von der ersten Elektrode (44) hin zu einem (35s) der Sprühlöcher (35) ausgerichtet ist, das sich am nächsten an der ersten Elektrode (44) befindet, und wobei der Gasstrom in der Strecke einen Gasstrom in der Funkenstrecke (45) bezeichnet.

**Revendications**

1. Système d'allumage comprenant :

   une paroi de séparation (34) qui divise une chambre de combustion (30) d'un moteur (90) en une chambre principale (31) et une préchambre (38) et dans laquelle est formé au moins un trou de pulvérisation (35) qui communique entre la chambre principale (31) et la préchambre (38) ; et
   une bougie d'allumage (40) dans laquelle une tension est appliquée à travers un éclateur (45) entre une première électrode (44) et une seconde électrode (46) pour créer une étincelle électrique (*f*) afin d'enflammer le carburant, dans lequel
   la préchambre (38) abrite la bougie d'allumage (40) avec la première électrode (44),
   la paroi de séparation (34) ou un élément relié électriquement à la paroi de séparation (34) comporte la seconde électrode (46),
   un mode de commande d'allumage après le point mort haut dans lequel une opération d'allumage pour enflammer le carburant à l'aide de la bougie d'allumage (40) est effectuée après l'exécution d'une course de compression au point mort haut (*Td*) lorsqu'une condition de fonctionnement donnée du moteur (90) est remplie, et
   dans le mode de commande d'allumage après le point mort haut, une source d'allumage qui se présente sous la forme d'un noyau de flamme auto-croissant est fournie dans une région proche du trou de pulvérisation (R) à l'intérieur de la préchambre (38), du trou de pulvérisation (35), ou dans la chambre principale (31) à un angle de vilebrequin de 20° après un moment d'allumage (*Ts*) où le moment d'allumage (Ts) est un moment où la tension commence à être appliquée à travers l'éclateur (45), et la région proche du trou de pulvérisation (R) est une région qui est située à 3 mm ou moins du centre du trou de pulvérisation qui est un centre d'une ouverture du trou de pulvérisation (35) qui fait face à la préchambre (38), **caractérisé par le fait que**
   une relation de $S/V \leq$ -0.025D^3 + 0.34D^2 - 1.4D + 2.1, où *V* est un volume de la préchambre (38) en unités de centimètres cubes, *S* est une surface de section totale du au moins un trou de pulvérisation (35) dans la paroi de séparation (34) en unités de mm^2, et *D* est une distance entre la première électrode (44) et le trou de pulvérisation (35) en unités de mm ou, lorsque la paroi de séparation (34) comporte une pluralité de trous de pulvérisation (35), *D* représente une distance entre la première électrode (44) et l'un (35s) des trous de pulvérisation (35) qui est situé le plus près de l'éclateur (45).

2. Le système d'allumage selon la revendication 1, dans lequel dans le mode de contrôle d'allumage après le point mort haut, l'étincelle est étendue pour atteindre l'intérieur de la chambre principale (31) afin de fournir la source d'allumage dans la chambre principale (31) dans un angle de vilebrequin de 20° après le moment de l'allumage (*Ts*).

3. Le système d'allumage selon la revendication 1 ou 2, dans lequel un flux de gaz traverse l'éclateur (45) à une vitesse de 5 m/s ou plus pendant la période de temps au cours de laquelle l'étincelle est créée dans le mode de commande d'allumage après le point mort haut.

4. Le système d'allumage selon l'une des revendications 1 à 3, dans lequel une relation de $0,3 \leq S/V \leq 2,1$ est respectée, où *V* est un volume de la préchambre (38) en unités de centimètres cubes, et *S* est une surface sectionnelle totale du trou de pulvérisation (35) dans la paroi de séparation (34) en unités de mm^2.

5. Le système d'allumage selon l'une des revendications 1 à 4, dans lequel un flux de gaz d'entrefer tourne d'un côté de direction opposée du trou de pulvérisation (35) (*d2*) vers un côté de direction du trou de pulvérisation (35) (*d1*) jusqu'à ce que le moment d'allumage (*Ts*) soit atteint dans le mode de commande d'allumage après le point mort supérieur pour que le flux de gaz d'entrefer soit orienté vers le côté de direction du trou de pulvérisation (35) (*d1*) au moment

**EP 4 194 672 B1**

d'allumage (*Ts*) où le côté de direction du trou de pulvérisation (35) *(d1)* représente une direction qui comprend, comme composante, une direction du trou de vaporisation (35) qui est une direction orientée de la première électrode (44) vers le trou de vaporisation (35), le côté de la direction opposée du trou de pulvérisation (35) *(d2)* représente une direction qui comprend, en tant que composant, une direction opposée du trou de pulvérisation (35) orientée à l'opposé de la direction du trou de pulvérisation (35), ou lorsque la paroi de séparation (34) comporte une pluralité de trous de pulvérisation (35), la direction du trou de pulvérisation (35) est une direction orientée de la première électrode (44) à l'un (35s) des trous de pulvérisation (35) qui est situé le plus près de la première électrode (44), et le flux de gaz dans l'entrefer désigne un flux de gaz dans l'éclateur (45).

# FIG.1

# FIG.2

# FIG.3

# FIG.4

# FIG.5

# FIG.6

# FIG.7

SPRAY HOLE RATIO (S/V)

CURVE $\alpha$

$$\left( \frac{S}{V} = -0.025D^3 + 0.34D^2 - 1.4D + 2.1 \right)$$

(FLOW RATE $<$ 5m/s)

(FLOW RATE $>$ 5m/s)

(FLOW RATE = 5m/s)

REGION $\beta$     SPRAY HOLE DISTANCE (D)

$$\left( \frac{S}{V} \leq -0.025D^3 + 0.34D^2 - 1.4D + 2.1 \right)$$

# FIG.8(a)

FIRST COMPARATIVE EXAMPLE

# FIG.8(b)

SECOND COMPARATIVE EXAMPLE

# FIG.8(c)

FIRST MODE

# FIG.8(d)

SECOND MODE

# FIG.9

# FIG.10

# FIG.11

# FIG.12

# FIG.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021153275 A1
- WO 2021157322 A1
- US 1403886 A
- EP 2146070 B1
- JP 5122367 B